Europäisches Patentamt

European Patent Office

Office européen des brevets

(11) Publication number: **0 300 981**
**A1**

# (12) EUROPEAN PATENT APPLICATION

(21) Application number: **88830311.2**

(22) Date of filing: **19.07.88**

(51) Int. Cl.⁴: **C 08 G 63/74**
**B 01 D 11/02**

(30) Priority: **24.07.87 IT 6764587**

(43) Date of publication of application:
**25.01.89 Bulletin 89/04**

(84) Designated Contracting States:
**AT BE CH DE ES FR GB GR LI LU NL SE**

(71) Applicant: **COBARR S.p.A.**
**Via Anticolana Km 1**
**I-03012 Anagni Frosinone (IT)**

(72) Inventor: **Al Ghatta, Hussain Ali-Kashif**
**Via Diaz**
**I-03014 Fiuggi (Frosinone) (IT)**

(74) Representative: **Notaro, Giancarlo et al**
**c/o Jacobacci-Casetta & Perani S.p.A. Via Alfieri, 17**
**I-10121 Torino (IT)**

(54) A method for the reduction of impurities in polyester resins.

(57) A method for the reduction of impurities, particularly acetaldehyde, present in polymer materials based on polyethyleneterephthalate and polyethyleneterephthalate copolymers comprises the removal of the impurities with the use of supercritical carbon dioxide.

EP 0 300 981 A1

Bundesdruckerei Berlin

**Description**

## A method for the reduction of impurities in polyester resins

The present invention relates to a method for the reduction of impurities, particularly acetaldehyde, present in polymer materials based on polyethyleneterephthalate and polyethyleneterephthalate copolymers.

The presence of acetaldehyde, for example, in the polyethyleneterephthalate granules is the cause of considerable problems both when the granules are intended for a polycondensation process in the solid state and when the already polycondensed granules are transformed into products, for example preformed parts or bottles.

The object of the present invention is to provide a method of the type specified at the beginning of the description which enables the above problems to be resolved simply and cheaply.

According to the invention, this object is achieved by virtue of the fact that the materials are treated in an atmosphere containing carbon dioxide under supercritical conditions.

When polyethyleneterephthalate or polyethyleneterephthalate copolymer granules, films etc. are treated with supercritical carbon dioxide, a surprising reduction in the acetaldehyde content of the polymer is in fact noted, this content resulting either from the polymerisation process, from the polycondensation process, or from the sudden heating of the polymer in the production of finished articles.

In order to obtain the best results in the reduction of the impurity content, pressures greater than 50 bars and temperatures between 31° and 245°C are preferred.

The invention will be better understood with the aid of the following examples, whose content should not be understood as limiting of the scope of the present invention.

### EXAMPLE 1

200 kg of polyethyleneterephthalate (PET) granules with an intrinsic viscosity of 0.78 (measured by the dissolution of 0.5 g of PET in a mixture of 100 ml of phenol/tetrachloroethane) were treated in an autoclave at 300 bars for 2 hours at an average temperature of 115°C.

The rate at which acetaldehyde was generated, measured at 250°C, was 0.3 ppm/minute before the treatment, whilst after the treatment the rate of generation of acetaldehyde was reduced to 0.12 ppm/minute.

### EXAMPLE 2

200 kg of PET granules with an intrinsic viscosity of 0.64 were treated in an autoclave containing carbon dioxide at 350 bars and 120°, with a treatment time of 1.5 hours.

The acetaldehyde content of the granules was measured by the known method described, for example, in patent application No. 22898-A/85, filed by the Applicant. This content was 110 ppm before treatment with supercritical carbon dioxide, whilst after treatment the content was reduced to 10 ppm.

According to a variant of the invention, the reduction of the acetaldehyde content with the use of supercritical carbon dioxide is further improved if water vapour is added to the carbon dioxide, preferably at a percentage which may vary between 1.1 and 10%. The following example describes the result of a test in which carbon dioxide was used with water vapour.

### EXAMPLE 3

The same starting granules were used as in Example 2, and under the same conditions, the only difference being that 2% by weight of water vapour was added to the carbon dioxide. The acetaldehyde content after the treatment was 7 ppm.

### EXAMPLE 4

Whilst Examples 2 and 3 relate to a PET of low intrinsic viscosity (not yet subjected to polycondensation treatment), this last example, like Example 1 given above, relates to PET granules with an intrinsic viscosity of 0.78.

200 kg of PET were treated in an autoclave with carbon dioxide at 250 bars and 180°C for one hour. The acetaldehyde content before the treatment was 2 ppm, whilst after treatment the content was reduced to 0.8 ppm.

**Claims**

1. A method for the reduction of impurities, particularly acetaldehyde, present in polymer materials based on polyethyleneterephthalate and polyethyleneterephthalate copolymers, characterised in that the materials are treated in an atmosphere containing carbon dioxide under supercritical conditions.

2. A method according to Claim 1, characterised in that the materials are polyethyleneterephthalate granules or polyethyleneterephthalate copolymer granules.

3. A method according to Claim 1, characterised in that the treatment is carried out at a pressure greater than 50 bars.

4. A method according to Claim 1, characterised in that the treatment is carried out at a temperature between 31°C and 245°C.

5. A method according to Claim 1, characterised in that the atmosphere in which the materials are treated contains water vapour in addition to the supercritical carbon dioxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 323 940 (HOECHST AG) * claims 1-3,5; page 2, lines 35-37; page 3, line 34 - page 4, line 3; page 4, line 35 - page 5, line 19 * --- | 1-5 | C 08 G 63/74 B 01 D 11/02 |
| Y | EP-A-0 227 608 (COBARR SPA) * claims 1,7; & IT - A - 85/22 898 (cat. D,Y) * --- | 1-5 | |
| A | CHEMICAL ABSTRACTS volume 102, no. 10, 11th March 1985, page 416, abstract no. 85135v; D.K. DANDGE et al.: "Structure solubility correlations: organic compounds and dense carbon dioxide binary systems"; & IND. ENG. CHEM. PROD. RES. DEV., volume 24, no. 1, 1985, pages 162-166 --- | 1 | |
| A | GB-A-2 118 565 (EMS-INVENTA AG) * claims 1-6 * --- | 1,5 | |
| P,X | EP-A-0 269 583 (COBARR SPA) * claims 1,2,4,5 * ----- | 1-4 | TECHNICAL FIELDS SEARCHED (Int. Cl.4) B 01 D 11/02 C 08 G 63/74 |

The present search report has been drawn up for all claims

| Place of search | Date of completion of the search | Examiner |
|---|---|---|
| BERLIN | 24-10-1988 | IDEZ C.G. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)